# EUROPEAN PATENT SPECIFICATION

(11) **EP 3 995 363 B1**
(45) Date of publication and mention of the grant of the patent: **11.10.2023**
(21) Application number: 20847003.9
(22) Date of filing: 21.07.2020
(51) Int. Cl.: B60R 16/02, B60R 16/023, B60J 1/00, B60R 21/00, B60R 21/01, B60W 50/02, E05F 15/695

(54) **VEHICLE CONTROL SYSTEM**
FAHRZEUGSTEUERUNGSSYSTEM
SYSTÈME DE COMMANDE DE VÉHICULE

(30) Priority: 30.07.2019 JP 2019140268
(43) Date of publication of application: 11.05.2022
(73) Proprietor: MAZDA MOTOR CORPORATION, Hiroshima 730-8670 (JP)
(72) Inventor: KUROKAWA, Yoshimasa, Aki-gun, Hiroshima 730-8670 (JP); YAMASHITA, Tetsuhiro, Aki-gun, Hiroshima 730-8670 (JP)
(74) Representative: Behr, Wolfgang
(86) International application number: PCT/JP2020/028247
(87) International publication number: WO 2021/020230

(56) References cited:
- EP-A1- 1 060 922
- EP-A2- 0 869 040
- JP-A- 2005 273 421
- JP-A- 2006 051 922
- JP-A- 2006 299 635
- JP-A- 2014 237 929
- JP-A- 2019 098 932
- JP-B2- 3 912 218

## Description

### Technical Field

The technology disclosed herein belongs to a technical field related to a vehicle control system.

### Background Art

In recent years, electrification of in-vehicle devices has been markedly progressing, and motion of a vehicle has come to be controlled through electronic control.

For example, Japanese Patent No. JP 3912218 discloses a communication system for a vehicle, in which various electrical devices capable of performing data communication via communication lines are classified into a plurality of groups; the electrical devices of each of the groups are coupled to each other via a communication line for data communication; and a specific electrical device capable of relaying data (a control signal) between the communication lines of the respective groups is coupled between the communication lines, so that all the electrical devices coupled to the communication lines transmit and receive data to and from each other via the communication lines.

According to JP 3912218, when an abnormality in a data transmission path and an abnormal location are detected, data that is to pass through the abnormal location is identified, a detour path through which the identified data can be transmitted without passing through the abnormal path is set, and the data is transmitted through the detour route.

A vehicle control system according to the preamble of claim 1 is known from EP 0 869 040 A2. Further vehicle control systems are known from JP 2005 273421 A, JP 2006 299635 A, JP 2019 098932 A, JP 2014 237929 A, JP 2006 051922 A and EP 1 060 922 A1.Summary of Invention

### Technical Problem

If a detour path for a control signal is set as in JP 3912218, the control signal can be transmitted to a target device even when an abnormality occurs in a communication line. However, the transmission path of a control signal is generally set so that the control signal reaches the target device through the shortest path. Thus, it takes time for the control signal to reach the target device if the control signal passes through the detour path.

Devices mounted in a vehicle include devices, such as power window devices, that are not related to driving control, braking control, and steering control of the vehicle but are required to have high responsiveness. In particular, it is desirable to make the response time as short as possible for devices that are required to have high responsiveness in an environment in which an abnormality in communication is likely to occur such as at the time of a collision of the vehicle.

The technology disclosed herein has been made in view of such points, and an object thereof is to allow a device not related to driving control, braking control, and steering control of a vehicle to have responsiveness that is as high as possible even when an abnormality related to a control signal occurs.

### Solution to Problem

To solve the problems described above, the technology disclosed herein is directed to a vehicle control system according to claim 1. Preferred embodiments of the present invention form the subject matter of the dependent claims.

The present invention comprises a vehicle control system including a plurality of sensors; a central control device configured to generate control signals for a plurality of devices, based on outputs of the respective sensors; and a plurality of relay devices each disposed in a communication path between the central control device and a corresponding device among the devices and configured to relay a control signal generated by the central control device, in which the relay devices include a specific relay device configured to output a control signal to a specific device not related to driving control, braking control, and steering control of a vehicle, the specific relay device including a sub-control unit capable of controlling the specific device, based on an output of at least one sensor among the sensors; the sub-control unit is configured to output a control signal for setting the specific device in an operating state or a non-operating state in accordance with the output of the at least one sensor; and in response to a central control abnormality that is an abnormality related to a control signal from the central control device, the specific relay device controls, with the sub-control unit, the specific device coupled to the specific relay device.

According to this configuration, when the central control abnormality occurs, the specific device can be controlled by the sub-control unit of the specific relay device. Since the specific relay device is located in the communication path between the central control device and the specific device, the communication time of the control signal from the specific relay device to the specific device can be made as short as possible. Thus, the specific device can have responsiveness that is as high as possible even when an abnormality occurs in the communication path of the control signal.

In addition, since the sub-control unit just outputs a control signal for setting the specific device in the operating state or the non-operating state, the sub-control unit is not required to have a high processing capability. Thus, the processing time of the sub-control unit is short, which can consequently make responsiveness of the specific device high.

In the vehicle control system, control of the specific device based on a signal from a specific sensor related only to an operation of the specific device among the plurality of sensors is performed by the sub-control unit; the central control device is configured to generate a control signal for the specific device, based on outside-vehicle environment information that is information regarding an environment outside the vehicle and obtained from the outputs of the sensors; the specific relay device transmits the control signal generated based on the outside-vehicle environment information and transmitted from the central control device, to the specific device coupled to the specific relay device when there is not the central control abnormality, and the sub-control unit of the specific relay device is configured to control the specific device coupled to the specific relay device, in accordance with a signal from the specific sensor regardless of whether or not there is the central control abnormality.

According to this configuration, if the sub-control unit alone is responsible for the control based on the signal from the specific sensor regardless of whether or not there is the central control abnormality, the specific device can be caused to operate based on the signal from the specific sensor even when the central control abnormality occurs. In addition, since the communication path of the signal does not change before and after the central control abnormality, an influence of the central control abnormality on responsiveness is markedly small. Therefore, high responsiveness is more likely to be implemented.

In the vehicle control system, the central control abnormality may include an abnormality in the central control device, and the central control device may include a central abnormality diagnosis unit configured to diagnose an abnormality in the central control device, and may notify the specific relay device of occurrence of the central control abnormality in response to the central abnormality diagnosis unit detecting an abnormality in the central control device.

According to this configuration, the specific relay device can recognize the occurrence of an abnormality in the central control device. Thus, the control signal for the specific device from the central control device can be set so as not to be transferred to the specific device. On the other hand, the operation of the specific device can be implemented by the sub-control unit. As a result, the fail-safe capability can be improved.

In the vehicle control system, the specific device may include a power window device.

Specifically, the power window device is desirably set in an open state at the time of a collision of the vehicle, and an electric motor of the power window device is a device that is to operate with good responsiveness at the time of the collision of the vehicle. Thus, if the specific device includes the power window device, an advantageous effect of implementing responsiveness that is as high as possible even when an abnormality occurs in the communication path of the control signal can be more appropriately exhibited. Advantageous Effects of Invention

As described above, according to the technology disclosed herein, even when an abnormality occurs in a communication path of a control signal from a central control device, the control signal can be output from a sub-control unit of a specific relay device located in a communication path between the central control device and a specific device that is a device not related to driving control, braking control, and steering control of a vehicle. Thus, the specific device can have responsiveness that is as high as possible even when an abnormality related to the control signal occurs.

### Brief Description of Drawings

[Fig. 1] Fig. 1 is a schematic diagram illustrating part of a communication path in a vehicle equipped with a vehicle control system according to an exemplary embodiment.
[Fig. 2] Fig. 2 is a schematic diagram illustrating the vehicle equipped with the vehicle control system.
[Fig. 3] Fig. 3 is a block diagram illustrating a configuration of a central ECU and zone ECUs on a driver's seat side.
[Fig. 4] Fig. 4 is a block diagram illustrating signals output by the zone ECUs when there is a central control abnormality.

### Description of Embodiments

An exemplary embodiment will be described in detail below with reference to the drawings.

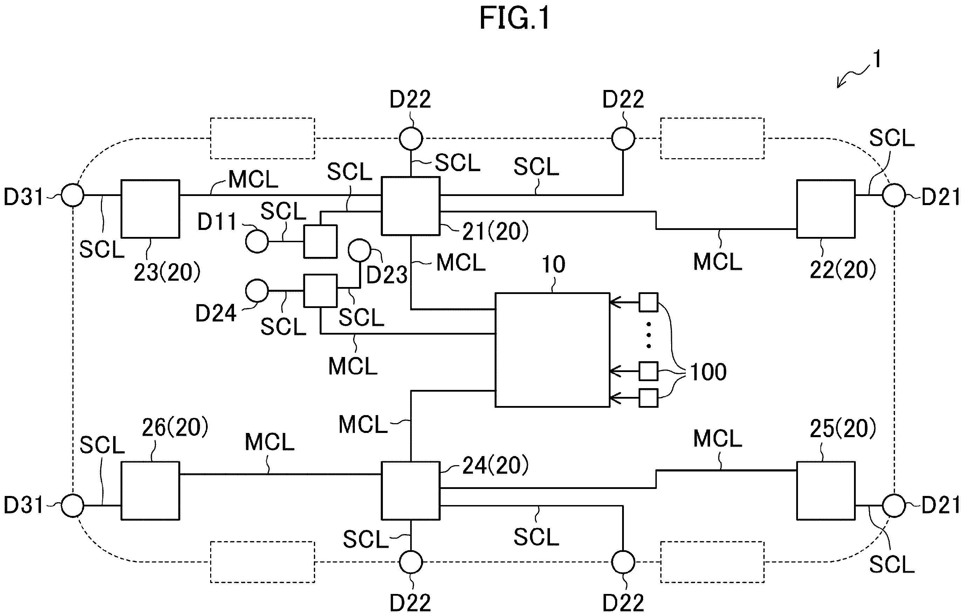

Fig. 1 schematically illustrates a configuration of a communication path in a vehicle 1 equipped with a vehicle control system according to the present embodiment. This vehicle 1 is an automobile capable of performing assist driving in which the automobile travels while assisting a driver in operations and autonomous driving in which the automobile travels without operations of the driver as well as manual driving in which the automobile travels in accordance with operations of the driver. This vehicle 1 employs a by-wire system for performing electrical control, in driving control, braking control, and steering control. That is, in the vehicle 1, an operation on an accelerator pedal, an operation on a brake pedal, and an operation on a steering wheel are detected by respective sensors. In accordance with a control signal based on an output of each of the sensors, a corresponding actuator responsible for control is controlled.

As illustrated in Fig. 1, the vehicle 1 includes a plurality of kinds of in-vehicle devices. The in-vehicle devices include so-called body-related devices that are not related to driving, braking, and steering, which are fundamental actions of the vehicle 1. The in-vehicle devices illustrated in Fig. 1 are an example of in-vehicle devices mounted in the vehicle 1, and the vehicle 1 may include an in-vehicle device other than the in-vehicle devices illustrated in Fig. 1.

In the present embodiment, the in-vehicle devices are mainly classified into three types. A first type refers to in-vehicle devices that are related to fundamental actions of the vehicle 1 and for which continuous control is to be continued even in case of emergency. A second type refers to in-vehicle devices that are not related to the fundamental actions of the vehicle 1 and for which whether or not to operate is to be selected in accordance with a state of the vehicle 1 in case of emergency. A third type refers to in-vehicle devices that are not related to the fundamental actions of the vehicle 1 and are just required to continue either an operating state or a non-operating state in case of emergency. Hereinafter, the in-vehicle devices of the first type are referred to as fundamental devices, the in-vehicle devices of the second type are referred to as selective devices, and the in-vehicle devices of the third type are referred to as fixed devices.

The fundamental devices include, for example, an electric power steering device (EPS device) D11, electric braking devices, and a throttle valve and a fuel injection valve of an engine. The selective devices include brake lamps D21, power window devices D22, an inflator D23 of an airbag device, a telephone mechanism D24 of the airbag device, and so on. The fixed devices include headlights D31 and so on. The power window devices D22, the inflator D23, and the telephone mechanism D24 are an example of specific devices.

To control operations of various in-vehicle devices, the vehicle 1 includes a central ECU 10 (Electric Control Unit) that serves as a central control device, and a plurality of (six in Fig. 1) zone ECUs 20 configured to be capable of communicating with the central ECU 10.

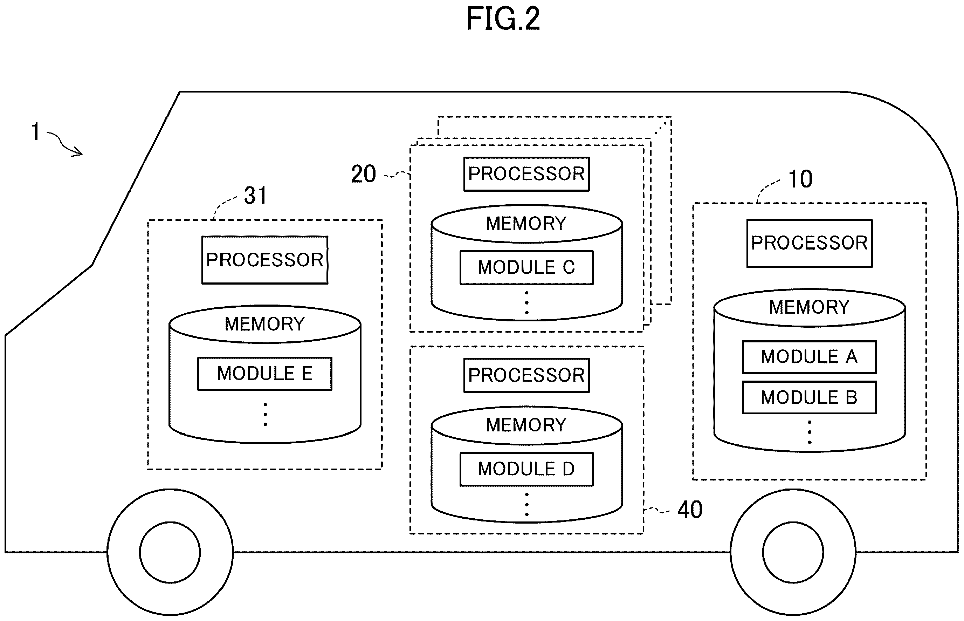

As illustrated in Fig. 2, each of the central ECU 10 and the zone ECUs 20 is computer hardware, and specifically, includes a processor including a CPU, a memory that stores a plurality of modules, and the like. Each ECU may include a plurality of processors and a plurality of memories.

The central ECU 10 generates a control signal for controlling each in-vehicle device mounted in the vehicle 1. In the vehicle 1, a control signal of each in-vehicle device is generated by the central ECU 10, and is transferred to the in-vehicle device via the zone ECU 20 and so on as a rule.

As illustrated in Figs 1, 3, and 4, signals from a plurality of sensors 100 mounted in the vehicle 1 are input to the central ECU 10. The plurality of sensors 100 include, for example, a plurality of cameras 101 that are disposed at a body or the like of the vehicle and images an environment outside the vehicle; a plurality of radars 102 that are disposed at the body or the like of the vehicle and detects an object located outside the vehicle; a location sensor 103 that detects a location of the vehicle (vehicle location information) by using the global positioning system (GPS); occupant state sensors 104 each of which obtains a state of an occupant including whether the occupant is present in the vehicle; a brake pedal sensor 106 that obtains an amount by which the brake pedal is pressed by a driver of the vehicle; a steering angle sensor 105 that obtains a steering angle of the steering operated by the driver of the vehicle; and an accelerator pedal position sensor 107 that obtains an amount by which the accelerator pedal is pressed by the driver of the vehicle. The sensors 101 to 107 illustrated herein are an example of sensors that input information to the central ECU 10. The present embodiment does not exclude the case where information is input to the central ECU 10 from a sensor other than the sensors 101 to 107.

The cameras 101 are arranged so that an area around the vehicle are imaged by 360 degrees in the horizontal direction. Each of the cameras 101 captures an optical image representing an environment outside the vehicle and generates image data. Each of the cameras 101 outputs the generated image data to the central ECU 10.

Similarly to the cameras 101, the radars 102 are arranged so that a detection range extends around the vehicle by 360 degrees in the horizontal direction. The type of the radars 102 is not particularly limited. For example, millimeter wave radars or infrared radars can be employed.

The occupant state sensors 104 are constituted by, for example, a vehicle-cabin camera that images the inside of the vehicle cabin and load sensors each disposed in a seat cushion. The occupant state sensors 104 output the generated image data and detection results to the central ECU 10.

The central ECU 10 is, for example, a processor constituted by one or a plurality of chips. The central ECU 10 may have an AI (Artificial Intelligence) function.

When the vehicle 1 is performing manual driving or assist driving, the central ECU 10 calculates a driving force, a braking force, and a steering angle to be output by the respective in-vehicle devices, based on detection values respectively obtained by the accelerator pedal position sensor 107, the brake pedal sensor 106, the steering angle sensor 105, etc. The central ECU 10 generates target signals indicating the calculated driving force, braking force, and steering angle, that is, target states of the driving force, braking force, and steering angle to be achieved by the respective in-vehicle devices. In particular, when the vehicle 1 is performing assist driving, the central ECU 10 takes into account target motion of the vehicle 1 described later, in calculation of the driving force, the braking force, and the steering angle.

To enable the vehicle 1 to perform autonomous driving or assist driving, the central ECU 10 receives information from the plurality of sensors 101 to 107 and calculates a route along which the vehicle 1 is to travel. The central ECU 10 determines the motion of the vehicle 1 for following the calculated route.

The central ECU 10 receives information from the plurality of sensors 100 and infers the environment outside the vehicle 1. The environment outside the vehicle refers to the presence or absence of an object, a road condition, and ambient brightness. The central ECU 10 integrates information such as a relative distance to the object obtained by the radars 102, with images of the outside of the vehicle captured by the cameras 101 and a recognition result of the object so as to create a 3D map representing the environment outside the vehicle.

Based on the created 3D map, the central ECU 10 creates a 2D map for use in calculation of a travel route of the vehicle 1. Based on the created 2D map, the central ECU 10 generates a travel route of the vehicle 1. The central ECU 10 determines target motion of the vehicle for following the generated travel route, and calculates a driving force, a braking force, and a steering angle for implementing the determined target motion. The central ECU 10 generates target signals indicating the calculated driving force, braking force, and steering angle, that is, target states of the driving force, braking force, and steering angle to be achieved by the respective fundamental devices.

Based on the inferred environment outside the vehicle and the calculated travel route, the central ECU 10 generates control signals for the body-related devices that are not related to driving control, braking control, and steering control of the vehicle 1. For example, the central ECU 10 generates a control signal to be transmitted to the headlights D31 so that the headlights D31 are turned on when it is inferred that the surrounding area is dark, or generates a control signal to be transmitted to the power window devices D22 so that the windows are closed when the windows are open before the vehicle enters a tunnel.

Based on information obtained by the occupant state sensors 104, the central ECU 10 infers a state of an occupant in the vehicle cabin by using a trained model generated through deep learning. The state of an occupant means a health condition or emotion of the occupant. Examples of the health condition of the occupant include being healthy, being a little tired, being in bad shape, and being less conscious. Examples of the emotion of the occupant include being fun, being OK, getting bored, being annoyed, and being uncomfortable. The central ECU 10 generates various control signals in consideration of the health condition of the occupant and the emotion of the occupant as well. For example, when the central ECU 10 infers that the temperature in the vehicle cabin is high and the occupant does not feel well, the central ECU 10 causes an air-conditioner to operate or causes the power window device D22 to operate so as to open a window.

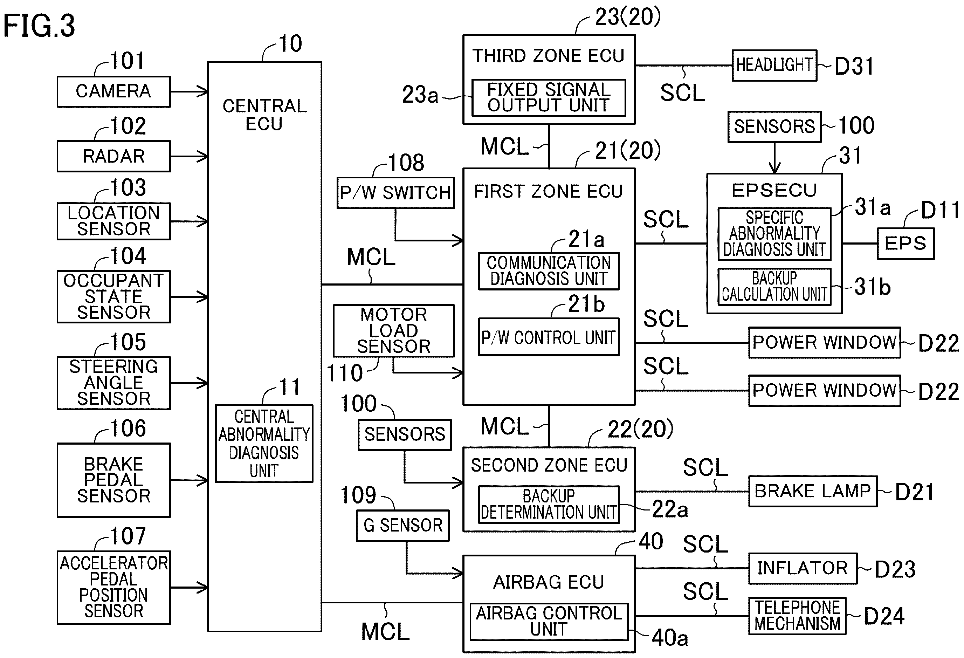

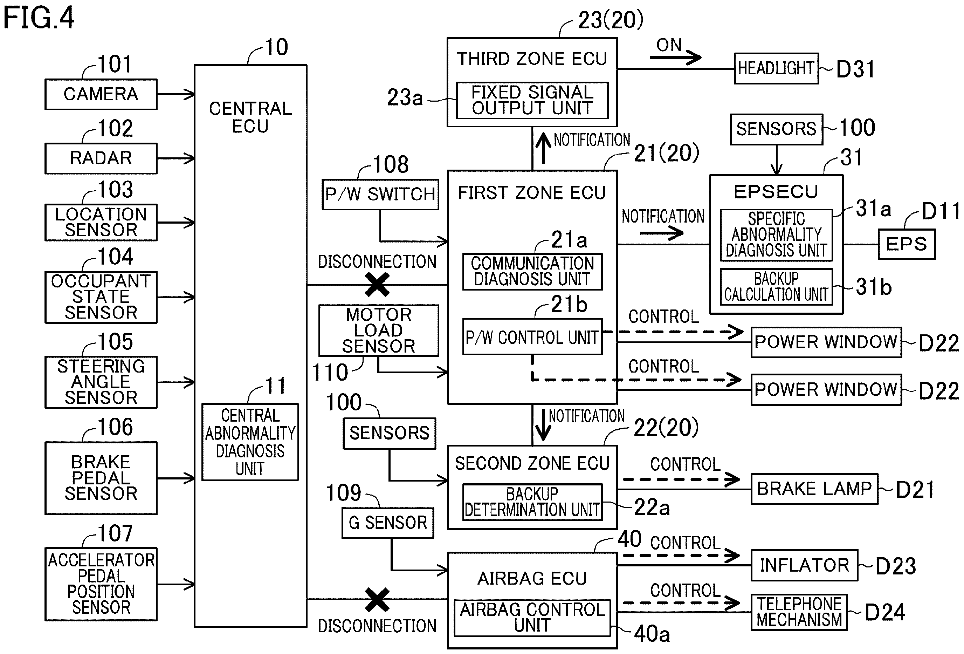

As illustrated in Figs. 3 and 4, the central ECU 10 includes a central abnormality diagnosis unit 11 that diagnoses an abnormality in the central ECU 10. The central abnormality diagnosis unit 11 diagnoses an abnormality in the central ECU 10 through a BIST (Built-In Self Test), for example. The central ECU 10 notifies the zone ECUs 20 (in this case, a first zone ECU 21 and a fourth zone ECU 24 described later) of a diagnosis result obtained by the central abnormality diagnosis unit 11. The central abnormality diagnosis unit 11 is an example of the modules stored in the memory of the central ECU 10.

The zone ECU 20 is disposed in a communication path between the central ECU 10 and each in-vehicle device in each predetermined zone of the vehicle 1. Each zone ECU 20 constitutes a relay device that relays a control signal generated by the central ECU 10. In the present embodiment, the zone ECU 20 disposed in a right central portion of the vehicle may be referred to as the first zone ECU 21, the zone ECU 20 disposed in a right rear portion of the vehicle may be referred to as a second zone ECU 22, the zone ECU 20 disposed in a right front portion of the vehicle may be referred to as a third zone ECU 23, the zone ECU 20 disposed in a left central portion of the vehicle may referred to as the fourth zone ECU 24, the zone ECU 20 disposed in a left rear portion of the vehicle may be referred to as a fifth zone ECU 25, and the zone ECU 20 disposed in a left front portion of the vehicle may be referred to as a sixth zone ECU 26. The zones may be determined in any manner. If the number of zones increases or decreases, the number of zone ECUs 20 increases or decreases accordingly.

As illustrated in Fig. 1, the first zone ECU 21 is coupled to the central ECU 10 by a communication line MCL and is also coupled to the second zone ECU 22 and the third zone ECU 23 by communication lines MCL. The fourth zone ECU 24 is coupled to the central ECU 10 by a communication line MCL and is also coupled to the fifth zone ECU 25 and the sixth zone ECU 26 by communication lines MCL. That is, the first zone ECU 21 is configured to be capable of communicating with the second zone ECU 22 and the third zone ECU 23 via the communication lines MCL. On the other hand, the fourth zone ECU 24 is configured to be capable of communicating with the fifth zone ECU 25 and the sixth zone ECU 26 via the communication lines MCL. The communication lines MCL that couple the central ECU 10 and the zone ECUs 20 to each other and the communication lines MCL that couple the zone ECUs 20 to each other are constituted by, for example, ETHERNET (registered trademark) communication cables.

On the other hand, each zone ECU 20 and corresponding in-vehicle devices are coupled by using communication lines SCL. The communication lines SCL are constituted by, for example, CAN communication cables. Although an illustration is omitted, each zone ECU 20 has a function of performing protocol conversion from ETHERNET (registered trademark) to CAN.

Configurations of the zone ECUs 20 will be described next. The configurations of the first zone ECU 21 to the third zone ECU 23 will now be described in detail with reference to Fig. 3.

As illustrated in Fig. 3, the first zone ECU 21 is coupled to, for example, the EPS device D11, the power window device D22 at a right front side door, and the power window device D22 at a right rear side door by using the communication lines SCL. That is, the first zone ECU 21 constitutes a specific relay device coupled to the power window devices D22 that are specific devices. The first zone ECU 21 may be coupled to other in-vehicle devices although illustrations of the other in-vehicle devices are omitted in FIG. 3.

An EPS ECU 31 that controls the EPS device D11, based on a control signal (target signal) relayed by the first zone ECU 21 is provided in a communication path between the first zone ECU 21 and the EPS device D11. The first zone ECU 21 transfers information transmitted from the central ECU 10, to the EPS ECU 31 without any processing. As described above, since the zone ECU 20 performs protocol conversion on the control signal transmitted from the central ECU 10, the control signal itself changes. The EPS ECU 31 will be described later.

The first zone ECU 21 includes a communication diagnosis unit 21a that diagnoses an abnormality in a state of communication between the first zone ECU 21 and the central ECU 10. The communication diagnosis unit 21a transmits a first test signal for communication diagnosis to the central ECU 10. The central ECU 10 that has received the first test signal from the communication diagnosis unit 21a returns, to the communication diagnosis unit 21a, a second test signal indicating that the central ECU 10 has received the first test signal. In response to successfully receiving the second test signal from the central ECU 10, the communication diagnosis unit 21a determines that the state of communication between the central ECU 10 and the first zone ECU 21 is normal. On the other hand, in response to failing to receive the second test signal from the central ECU 10, the communication diagnosis unit 21a determines that there is an abnormality in the state of communication between the central ECU 10 and the first zone ECU 21. If there is an abnormality in the state of communication between the first zone ECU 21 and the central ECU 10, the communication diagnosis unit 21a notifies the second zone ECU 22 and the third zone ECU 23 of the abnormality in the state of communication. For example, when the ignition of the vehicle 1 is switched on, the communication diagnosis unit 21a diagnoses an abnormality in the state of communication between the first zone ECU 21 and the central ECU 10. The abnormality in the state of communication is, for example, disconnection of the communication line MCL.

The first zone ECU 21 includes a power window control unit 21b (hereinafter, referred to as a "P/W control unit 21b") for controlling the power window devices D22. The P/W control unit 21b is a control unit for causing the power window device D22 to operate when an occupant of the vehicle presses a power window switch 108 (hereinafter, referred to as a "P/W switch" 108). Specifically, when the occupant of the vehicle presses the P/W switch 108, a switch signal for directly causing the power window device D22 to operate is input to the first zone ECU 21. This switch signal is not input to the central ECU 10 but is input only to the first zone ECU 21. The P/W control unit 21b that has received this switch signal outputs a control signal to the power window device D22. The signal output from the P/W control unit 21b is a control signal for setting the power window device D22 in an operating state or a non-operating state. Thus, the P/W control unit 21b corresponds to a sub-control unit to which an output of at least one sensor (the P/W switches 108) among the sensors is input and which controls the power window device D22, based on the output of the sensor. In addition, the first zone ECU 21 corresponds to a specific relay device. Further, the P/W switch 108 corresponds to a specific sensor related only to the operation of the power window device D22.

When detecting that the neck of an occupant is caught between a window glass and a vehicle body frame, the P/W control unit 21b transmits a control signal to the power window device D22 to set the window glass in an open state. Whether the neck of an occupant is caught between the window glass and the vehicle body frame is determined based on whether a load greater than or equal to a predetermined load is applied to an electric motor of the power window device D22. A signal of a motor load sensor 110 that detects a load of the electric motor D22 is input to the first zone ECU 21.

The P/W control unit 21b of the first zone ECU 21 controls the power window device D22, based on the switch signal from the P/W switch 108, regardless of whether or not there is an abnormality in the central ECU 10 and whether or not there is an abnormality in a state of communication between the central ECU 10 and the first zone ECU 21.

When there is no abnormality in the central ECU 10, in response to receiving a control signal for causing the power window device D22 to operate from the central ECU 10, the first zone ECU 21 transfers the control signal to the power window device D22. This control signal is a control signal generated by the central ECU 10, based on outside-vehicle environment information that is information regarding the environment outside the vehicle 1 and obtained from the outputs of the sensors 100. This control signal is a control signal that causes the power window device D22 to operate, separately from the switch signal described above. If the control signal from the central ECU 10 and the switch signal from the P/W switch 108 are input to the first zone ECU 21 substantially at the same time, the first zone ECU 21 prioritizes the switch signal from the P/W switch 108.

Similarly to the central ECU 10 and the zone ECUs 20, as illustrated in Fig. 2, the EPS ECU 31 is computer hardware, and specifically, includes a processor including a CPU, a memory that stores a plurality of modules, and the like.

Based on information on a target steering angle transferred from the central ECU 10, the EPS ECU 31 calculates a control amount of the EPS device D11 (such as an amount of current to be supplied to the electric motor) so that the EPS device D11 achieves the target steering angle. The EPS ECU 31 outputs a signal based on the calculated control amount to the EPS device D11.

The EPS ECU 31 is configured to be capable of obtaining information from at least one sensor among the plurality of sensors 100. In the present embodiment, the EPS ECU 31 is configured to be capable of obtaining an output of at least the steering angle sensor 105.

The EPS ECU 31 includes a specific abnormality diagnosis unit 31a that diagnoses an abnormality in the EPS ECU 31. In particular, the specific abnormality diagnosis unit 31a diagnoses an abnormality in a backup calculation unit 31b described later. The specific abnormality diagnosis unit 31a diagnoses an abnormality in the EPS ECU 31 through the BIST. The EPS ECU 31 notifies the first zone ECU 21 of a diagnosis result obtained by the specific abnormality diagnosis unit 31a. The first zone ECU 21 notifies the central ECU 10 of the result which the first zone ECU 21 is notified of by the EPS ECU 31. The specific abnormality diagnosis unit 31a and the backup calculation unit 31b are an example of the modules stored in the memory of the EPS ECU 31.

The EPS ECU 31 includes the backup calculation unit 31b capable of calculating a target steering angle for the EPS device D11, based on outputs of the sensors 100. When the central ECU 10 is normal and the state of communication from the central ECU 10 to the EPS ECU 31 is normal, the backup calculation unit 31b does not calculate the target steering angle for the EPS device D11. On the other hand, when there is an abnormality in the central ECU 10 or there is an abnormality in the state of communication from the central ECU 10 to the EPS ECU 31, the backup calculation unit 31b calculates the target steering angle for the EPS device D11. The backup calculation unit 31b calculates the target steering angle for the EPS device D11, based on information obtained by the sensor and input to the EPS ECU 31. The backup calculation unit 31b transmits a signal based on the calculated target steering angle to the EPS device D11.

Unlike the central ECU 10, the backup calculation unit 31b does not perform control according to the environment outside the vehicle. The backup calculation unit 31b performs control of the EPS device D11 based only on an operation performed by the occupant of the vehicle 1.

As illustrated in Fig. 3, the second zone ECU 22 is coupled to, for example, the brake lamp D21 on the right side by the communication line SCL. The second zone ECU 22 is configured to be capable of obtaining information from at least one sensor among the plurality of sensors 100. In the present embodiment, the second zone ECU 22 is configured to be capable of obtaining an output of at least the brake pedal sensor 106. The second zone ECU 22 is not coupled to the fundamental devices but is coupled to the selective devices and the fixed devices although illustrations of the other in-vehicle devices are omitted.

The second zone ECU 22 is directly coupled to the brake lamp D21 by the communication line SCL. The second zone ECU 22 transfers the information for the brake lamp D21 transmitted from the central ECU 10, to the brake lamp D21 without any processing. That is, the brake lamp D21 operates based on a control signal that is transmitted from the central ECU 10 and relayed by the second zone ECU 22 as a rule.

The second zone ECU 22 includes a backup determination unit 22a. The backup determination unit 22a determine whether to cause a selective device (the brake lamp D21 in this case), which coupled to the second zone ECU, to operate.

When the central ECU 10 is normal and the state of communication from the central ECU 10 to the second zone ECU 22 is normal, the backup determination unit 22a does not make determination as to whether to cause the brake lamp D21 to operate. On the other hand, when there is an abnormality in the central ECU 10 or there is an abnormality in the state of communication from the central ECU 10 to the second zone ECU 22, the backup determination unit 22a determines whether to cause the brake lamp D21 to operate. Based on at least one of information obtained by the sensor and input to the second zone ECU 22 and information input from the other zone ECU 20, the backup determination unit 22a determines whether to cause the brake lamp D21 to operate. The backup determination unit 22a transmits a control signal for causing the brake lamp D21 to operate, to the brake lamp D21. In accordance with the notification from the first zone ECU 21, the second zone ECU 22 recognizes an abnormality in the central ECU 10 and an abnormality in the state of communication between the central ECU 10 and the first zone ECU 21.

The second zone ECU 22 does not have a function of diagnosing an abnormality in the second zone ECU 22.

As illustrated in Fig. 3, the third zone ECU 23 is coupled to, for example, the headlight D31 on the right side by the communication line SCL. In the present embodiment, the outputs from the sensors are not input to the third zone ECU 23. The third zone ECU 23 is coupled neither to the fundamental devices nor to the selective devices but is coupled only to the fixed devices although illustrations of the other in-vehicle devices are omitted.

The third zone ECU 23 is directly coupled to the headlight D31 by the communication line SCL. The third zone ECU 23 transfers the information for the headlight D31 transmitted from the central ECU 10, to the headlight D31 without any processing. That is, the headlight D31 operates based on a control signal that is transmitted from the central ECU 10 and relayed by the third zone ECU 23 as a rule.

The third zone ECU 23 includes a fixed signal output unit 23a that outputs, to a fixed device (the headlight D31 in this case) coupled to the third zone ECU 23, one of a signal for setting the fixed device in an operating state or a signal for setting the fixed device in a non-operating state.

When the central ECU 10 is normal and the state of communication from the central ECU 10 to the third zone ECU 23 is normal, the fixed signal output unit 23a does not output an ON signal to the headlight D31. On the other hand, when there is an abnormality in the central ECU 10 or there is an abnormality in the state of communication from the central ECU 10 to the third zone ECU 23, the fixed signal output unit 23a outputs the ON signal to the headlight D31. Thus, when there is an abnormality in the central ECU 10 or there is an abnormality in the state of communication between the central ECU 10 and the third zone ECU 23, the headlight D31 is kept in a light-ON state.

The third zone ECU 23 does not have a function of diagnosing an abnormality in the third zone ECU 23.

The fourth zone ECU 24 to the sixth zone ECU 26 are also configured according to substantially the same design methods as those of the first zone ECU 21 to the third zone ECU 23, respectively. That is, the zone ECU 20, such as the fourth zone ECU 24, to which the central ECU 10 is coupled includes the communication diagnosis unit 21a as in the first zone ECU 21. In addition, the zone ECU 20, such as the fourth zone ECU 24, to which the power window devices D22 are coupled includes the P/W control unit 21b as in the first zone ECU 21. The zone ECU 20, such as the fifth zone ECU 25, to which no fundamental device is coupled but the selective devices (the brake lamp D21 in this case) are coupled includes the backup determination unit 22a as in the second zone ECU 22. The zone ECU 20, such as the sixth zone ECU 26, to which only the fixed devices (the headlight D31 in this case) are coupled includes the fixed signal output unit 23a as in the third zone ECU 23.

The communication diagnosis unit 21a and the P/W control unit 21b are an example of the modules stored in the memory of the first zone ECU 21 and the memory of the fourth zone ECU 24. The backup determination unit 22a is an example of the modules stored in the memory of the second zone ECU 22 and the memory of the fifth zone ECU 25. The fixed signal output unit 23a is an example of the modules stored in the memory of the third zone ECU 23 and the memory of the sixth zone ECU 26.

In the present embodiment, as illustrated in Figs. 3 and 4, an airbag ECU 40 that causes the airbag device to operate is provided independently of the zone ECUs 20. Similarly to the central ECU 10 and the zone ECUs 20, the airbag ECU 40 is also computer hardware, and specifically, includes a processor including a CPU, a memory that stores a plurality of modules, and the like.

The airbag ECU 40 is directly coupled to the inflator D23 and the telephone mechanism D24. That is, the airbag ECU 40 corresponds to a relay device disposed in a communication path between the central ECU 10 and the inflator D23 and in a communication path between the central ECU 10 and the telephone mechanism D24.

A detection signal from a G sensor 109 that detects an instantaneous acceleration applied to the vehicle is input to the airbag ECU 40. This detection signal is input only to the airbag ECU 40. The airbag ECU 40 determines whether there is a collision of the vehicle 1, based on the detection signal obtained by the G sensor 109.

The airbag ECU 40 includes an airbag control unit 40a. When it is determined that the vehicle 1 has collided based on the signal from the G sensor 109, the airbag control unit 40a ignites a squib of the inflator D23 to deploy the airbag. When it is determined that the vehicle 1 has collided, the airbag control unit 40a causes the telephone mechanism D24 to operate and reports, to a predetermined station outside the vehicle, that the vehicle 1 has collided. Thus, the airbag control unit 40a corresponds to a sub-control unit that outputs signals for setting the inflator D23 and the telephone mechanism D24 in the operating state, based on the signal from the G sensor 109. The airbag ECU 40 corresponds to a specific relay device including the airbag control unit 40a that is capable of controlling the specific devices (the inflator D23 and the telephone mechanism D24 in this case), based on the output of the G sensor 109. Further, the G sensor 109 corresponds to a specific sensor related only to an operation of the specific devices. The airbag control unit 40a is an example of the modules stored in the memory of the airbag ECU 40.

The airbag control unit 40a of the airbag ECU 40 controls the inflator D23 and the telephone mechanism D24, based on the output of the G sensor 109 regardless of whether or not there is an abnormality in the central ECU 10 and whether or not there is an abnormality in a state of communication between the central ECU 10 and the airbag ECU 40.

When being notified of a possibility of a collision by the central ECU 10, the airbag ECU 40 checks whether or not the squib of the inflator D23 is disconnected.

When there is a central control abnormality that is an abnormality related to the control signal transmitted from the central ECU 10, the in-vehicle device may fail to operate normally in accordance with the control signal from the central ECU 10. In particular, when a central control abnormality in which a control signal does not reach from the central ECU 10 because of disconnection of a communication line or the like occurs, it is difficult for the in-vehicle device to operate normally. As in the related art, when an abnormality occurs in a communication line to the central ECU 10, it is conceivable to form a detour path to enable notification of a signal from the central ECU 10. However, the in-vehicle devices include selective devices (hereinafter, referred to as "specific selective devices"), such as the power window devices D22 and the airbag device, that are not related to driving control, braking control, and steering control of the vehicle but for which determination according to a situation of the vehicle and high responsiveness are required. When the detour path is used as in the related art, the communication time increases, which may decrease the responsiveness. In particular, in case of emergency such as when the vehicle 1 is in danger of submergence, the central control abnormality is likely to occur but the power window devices D22 are required to quickly respond even when the central control abnormality occurs.

Accordingly, in the present embodiment, for the specific selective devices such as the power window devices D22 and the airbag device, sub-control units (the P/W control unit 21b and the airbag control unit 40a) are provided midway of the communication paths from the central ECU 10 to the devices. An output of at least one sensor among the sensors 100 is input to these sub-control units. Therefore, even when there is a central control abnormality (disconnection of a communication line, in this case), the specific selective device can be controlled by each of the sub-control units in accordance with the output of the at least one sensor among the sensors 100.

Fig. 4 illustrates signals output by the zone ECUs 20 when there is a central control abnormality. In FIG. 4, a signal that is automatically transmitted is indicated by a solid line arrow, and a signal that is output in accordance with the sensors 100 is indicated by a dash line.

In response to the communication diagnosis unit 21a detecting disconnection of the communication line MCL between the first zone ECU 21 and the central ECU 10, the first zone ECU 21 notifies the second zone ECU 22 and the third zone ECU 23 of the abnormality.

The first zone ECU 21 then notifies the EPS ECU 31 that the communication line between the first zone ECU 21 and the central ECU 10 is disconnected.

The EPS ECU 31 that has received the notification from the first zone ECU 21 calculates, with the backup calculation unit 31b, a control amount of the EPS device D11, based on the information obtained by the sensor and input to the EPS ECU 31. The EPS ECU 31 controls the EPS device D11 in accordance with the control amount calculated by the backup calculation unit 31b.

The P/W control unit 21b of the first zone ECU 21 controls the power window devices D22 in accordance with an output from the P/W switch 108 or an output of the motor load sensor 110.

Based on at least one of information obtained by the sensor and input to the second zone ECU 22 and information input from the other zone ECU 20, the second zone ECU 22 determines, with the backup determination unit 22a, whether to cause the brake lamp D21 to operate. The backup determination unit 22a transmits a control signal for causing the brake lamp D21 to operate, to the brake lamp D21.

The third zone ECU 23 outputs, with the fixed signal output unit 23a, the ON signal to the headlight D31 to keep the headlight D31 in the light-ON state.

As for the airbag ECU 40, even there is disconnection of the communication line MCL between the airbag ECU 40 and the central ECU 10, just the checking of disconnection of the squib based on the environment outside the vehicle is skipped and the control state does not change particularly.

As described above, in the present embodiment, when a central control abnormality occurs, the specific selective devices can be controlled by the respective sub-control units (for example, the P/W control unit 21b and the airbag control unit 40a) of the specific relay devices (for example, the first zone ECU 21 and the airbag ECU 40). Since each of the specific relay devices is located in the communication path between the central ECU 10 and the specific selective device, the communication time of the control signal from the specific relay device to the specific selective device can be made as short as possible. Thus, the specific selective device can have responsiveness that is as high as possible even when an abnormality occurs in the communication path of the control signal.

In particular, since the sub-control unit just outputs a control signal for setting the specific selective device in the operating state or the non-operating state, the sub-control unit is not required to have a high processing capability. Therefore, the processing time of the sub-control unit is short. This can consequently make responsiveness of the specific selective device high. Thus, the specific selective device can have responsiveness that is as high as possible even when a central control abnormality occurs.

In the present embodiment, control of the specific selective device based on a signal from the specific sensor, such as the P/W switch 108 or the G sensor 109, related only to the operation of the specific selective device is performed by the sub-control unit regardless of whether or not there is a central control abnormality. Thus, the communication path of the control signal based on the signal from the specific sensor does not change before and after the central control abnormality. As a result, an influence of the central control abnormality on responsiveness is markedly reduced. Therefore, high responsiveness is more likely to be implemented.

The abnormality related to the control signal include not only disconnection of a communication line but also an abnormality that occurs in the control signal transmitted from the central ECU 10 because of an abnormality in the central ECU 10. Accordingly, in the present embodiment, when the central abnormality diagnosis unit 11 detects an abnormality in the central ECU 10, the central ECU 10 transmits an abnormality notification to the first zone ECU 21 and the airbag ECU 40. The first zone ECU 21 and the airbag ECU 40 that have received the abnormality notification terminate the communication with the central ECU 10. The first zone ECU 21 and the airbag ECU 40 then control the in-vehicle devices including the specific selective devices, based on the outputs of the sensors that are input to the first zone ECU 21 and the airbag ECU 40 or the other ECUs (for example, the second zone ECU to the sixth zone ECU 22 to 26 and the EPS ECU 31). Thus, the fail-safe capability can be improved.

The technology disclosed herein is not limited to the embodiment described above and may be altered within a scope not departing from the gist of the claims.

For example, in the embodiment described above, the zone ECUs (the first zone ECU 21 to the third zone ECU 23) on the driver's seat side and the zone ECUs (the fourth zone ECU 24 to the sixth zone ECU 26) on the passenger's seat side are coupled to one another only through the central ECU 10. However, the configuration is not limited this. For example, the second zone ECU 22 and the fifth zone ECU 25 may be coupled to each other by a communication line and the third zone ECU 23 and the sixth zone ECU 26 may be coupled to each other by a communication line, so that a loop communication network may be formed. According to this configuration, it becomes easier for each zone ECU 20 to obtain information from the central ECU 10 and information from the other zone ECUs 20. Thus, the redundancy of the control system can be improved, and consequently the fail-safe capability can be improved.

In the embodiment described above, the specific abnormality diagnosis unit 31a is provided only in the EPS ECU 31. However, the configuration is not limited to this. The first zone ECU 21 may include a diagnosis unit that diagnoses an abnormality in the P/W control unit 21b. In addition, the airbag ECU 40 may include a diagnosis unit that diagnoses an abnormality in the airbag control unit 40a.

In the embodiment described above, the P/W control unit 21b is provided in the zone ECU 20. However, the configuration is not limited this. An ECU for the power window devices D22 may be provided separately from the zone ECUs 20 just like the airbag ECU 40. In this case, the ECU for the power window devices D22 desirably includes the communication diagnosis unit 21a for detecting an abnormality in a state of communication between the central ECU 10 and the ECU for the power window devices D22.

In the embodiment described above, only the specific zone ECUs (the first zone ECU 21 and the fourth zone ECU 24) include the communication diagnosis unit 21a. However, the configuration is not limited to this. Each of the airbag ECU 40 and the zone ECUs 20 may include the communication diagnosis unit 21a.

In the embodiment described above, a vehicle capable of performing autonomous driving is set as the target vehicle. However, the target vehicle need not be the vehicle capable of performing autonomous driving.

The embodiment described above is merely an example and is not to be construed as limiting the scope of the present disclosure. The scope of the present disclosure is defined by the claims, and all modifications and alterations within a scope of the equivalents of the claims are within the scope of the present disclosure.

### Industrial Applicability

The technology disclosed herein is useful for allowing a device not related to driving control, braking control, and steering control of a vehicle to have responsiveness that is as high as possible even when an abnormality related to a control signal occurs in a vehicle control system.

### Reference Signs List

- 10: central ECU (central control device)
- 11: central abnormality diagnosis unit
- 20: zone ECU
- 21: first zone ECU (specific relay device)
- 21a: communication diagnosis unit
- 21b: power window control unit (sub-control unit)
- 40: airbag ECU (specific relay device)
- 40a: airbag control unit (sub-control unit)
- 108: power window switch (specific sensor)
- 109: G sensor (specific sensor)
- 110: motor load sensor (specific sensor)
- D22: power window device (specific device)
- D23: inflator (specific device)
- D24: telephone mechanism (specific device)

## Claims

1. A vehicle control system comprising:
a plurality of sensors;
a central control device (10) configured to generate control signals for a plurality of devices, based on outputs of the respective sensors; and
a plurality of relay devices (20,40) each disposed in a communication path between the central control device (10) and a corresponding device among the devices and configured to relay a control signal generated by the central control device (10), wherein
the relay devices (20, 40) include a specific relay device (21, 40) configured to output a control signal to a specific device (D22,D23,D24) not related to driving control, braking control, and steering control of a vehicle, the specific relay device (21, 40) including a sub-control unit (21b,40a) capable of controlling the specific device (D22,D23,D24), based on an output of at least one sensor among the sensors,
the sub-control unit (21b,40a) is configured to output a control signal for setting the specific device (D22,D23,D24) in an operating state or a non-operating state in accordance with the output of the at least one sensor,
in response to a central control abnormality that is an abnormality related to a control signal from the central control device (10), the specific relay device (21, 40) controls, with the sub-control unit (21b,40a), the specific device (D22,D23,D24) coupled to the specific relay device (21, 40),
**characterized in that**
control of the specific device (D22,D23,D24) based on a signal from a specific sensor (108,109,110) related only to an operation of the specific device (D22,D23,D24) among the plurality of sensors is performed by the sub-control unit (21b,40a),
the central control device (10) is configured to generate a control signal for the specific device (D22,D23,D24), based on outside-vehicle environment information regarding an environment outside the vehicle and obtained from the outputs of the sensors,
the specific relay device (21, 40) transmits the control signal generated based on the outside-vehicle environment information and transmitted from the central control device (10), to the specific device (D22,D23,D24) coupled to the specific relay device (21, 40) when there is not the central control abnormality,
the sub-control unit (21b,40a) of the specific relay device (21, 40) is configured to control the specific device (D22,D23,D24) coupled to the specific relay device (21, 40), in accordance with a signal from the specific sensor (108,109,110) regardless of whether or not there is the central control abnormality, and
when there is no central control abnormality, if a control signal from the central control device (10) and a signal from the specific sensor (108,109,110) are input substantially at the same time, the specific relay device (21, 40) prioritizes the signal from the specific sensor (108,109,110) and controls, with the sub-control unit (21b,40a), the specific device (D22,D23,D24).

2. The vehicle control system according to Claim 1, wherein
the central control abnormality includes an abnormality in the central control device (10), and
the central control device (10) includes a central abnormality diagnosis unit configured to diagnose an abnormality in the central control device (10), and notifies the specific relay device (21, 40) of occurrence of the central control abnormality in response to the central abnormality diagnosis unit detecting an abnormality in the central control device (10).

3. The vehicle control system according to Claim 1 or 2, wherein
the specific device (D22,D23,D24) includes a power window device.

## Patentansprüche

1. Fahrzeugsteuerungssystem, aufweisend:
eine Vielzahl von Sensoren;
eine zentrale Steuerungsvorrichtung (10), die konfiguriert ist, Steuerungssignale für eine Vielzahl von Vorrichtungen basierend auf Ausgaben der jeweiligen Sensoren zu erzeugen; und
eine Vielzahl von Relaisvorrichtungen (20, 40), die jeweils in einem Kommunikationsweg zwischen der zentralen Steuerungsvorrichtung (10) und einer entsprechenden Vorrichtung unter den Vorrichtungen angeordnet und konfiguriert sind, ein durch die zentrale Steuerungsvorrichtung (10) erzeugtes Steuerungssignal weiterzuleiten,
wobei
die Relaisvorrichtungen (20, 40) eine spezifische Relaisvorrichtung (21, 40) aufweisen, die konfiguriert ist, ein Steuerungssignal an eine spezifische Vorrichtung (D22, D23, D24) auszugeben, die nicht auf Antriebssteuerung, Bremssteuerung und Lenksteuerung eines Fahrzeugs bezogen ist, wobei die spezifische Relaisvorrichtung (21, 40) eine Untersteuerungseinheit (21b, 40a) aufweist, die imstande ist, die spezifische Vorrichtung (D22, D23, D24) basierend auf einer Ausgabe mindestens eines Sensors unter den Sensoren zu steuern,
die Untersteuerungseinheit (21b, 40a) konfiguriert ist, ein Steuerungssignal zum Versetzen der spezifischen Vorrichtung (D22, D23, D24) in einen Betriebszustand oder einen Nichtbetriebszustand gemäß der Ausgabe des mindestens einen Sensors auszugeben,
als Reaktion auf eine zentrale Steuerungsanomalie, die eine Anomalie ist, die auf ein Steuerungssignal von der zentralen Steuerungsvorrichtung (10) bezogen ist, die spezifische Relaisvorrichtung (21, 40) mit der Untersteuerungseinheit (21b, 40a) die spezifische Vorrichtung (D22, D23, D24) steuert, die mit der spezifischen Relaisvorrichtung (21, 40) gekoppelt ist,
**dadurch gekennzeichnet, dass**
eine Steuerung der spezifischen Vorrichtung (D22, D23, D24) basierend auf einem Signal von einem spezifischen Sensor (108, 109, 110), der sich lediglich auf einen Betrieb der spezifischen Vorrichtung (D22, D23, D24) bezieht, aus der Vielzahl von Sensoren durch die Untersteuerungseinheit (21b, 40a) erfolgt,
die zentrale Steuerungsvorrichtung (10) konfiguriert ist, ein Steuerungssignal für die spezifische Vorrichtung (D22, D23, D24) basierend auf fahrzeugexternen Umgebungsinformationen zu erzeugen, die sich auf eine Umgebung außerhalb des Fahrzeugs beziehen und aus den Ausgaben der Sensoren erlangt werden,
die spezifische Relaisvorrichtung (21, 40) das Steuerungssignal, das basierend auf den externen Umgebungsinformationen des Fahrzeugs erzeugt und von der zentralen Steuerungsvorrichtung (10) übertragen wird, an die spezifische Vorrichtung (D22, D23, D24), die mit der spezifischen Relaisvorrichtung (21, 40) gekoppelt ist, überträgt, wenn die zentrale Steuerungsanomalie nicht vorliegt,
die Untersteuerungseinheit (21b, 40a) der spezifischen Relaisvorrichtung (21, 40) konfiguriert ist, die spezifische Vorrichtung (D22, D23, D24), die mit der spezifischen Relaisvorrichtung (21, 40) gekoppelt ist, gemäß einem Signal von dem spezifischen Sensor (108, 109, 110) ungeachtet dessen zu steuern, ob die zentrale Steuerungsanomalie vorliegt oder nicht, und
wenn keine zentrale Steuerungsanomalie vorliegt, wenn ein Steuerungssignal von der zentralen Steuerungsvorrichtung (10) und ein Signal von dem spezifischen Sensor (108, 109, 110) im Wesentlichen gleichzeitig eingegeben werden, die spezifische Relaisvorrichtung (21, 40) das Signal von dem spezifischen Sensor (108, 109, 110) priorisiert und mit der Untersteuerungseinheit (21b, 40a) die spezifische Vorrichtung (D22, D23, D24) steuert.

2. Fahrzeugsteuerungssystem nach Anspruch 1, wobei
die zentrale Steuerungsanomalie eine Anomalie in der zentralen Steuerungsvorrichtung (10) umfasst, und
die zentrale Steuerungsvorrichtung (10) eine Zentralanomalie-Diagnoseeinheit aufweist, die konfiguriert ist, eine Anomalie in der zentralen Steuerungsvorrichtung (10) zu diagnostizieren, und der spezifischen Relaisvorrichtung (21, 40) das Auftreten der zentralen Steuerungsanomalie als Reaktion darauf zu melden, dass die Zentralanomalie-Diagnoseeinheit eine Anomalie in der zentralen Steuerungsvorrichtung (10) detektiert.

3. Fahrzeugsteuerungssystem nach Anspruch 1 oder 2, wobei
die spezifische Vorrichtung (D22, D23, D24) eine elektrisch betriebene Fenstervorrichtung aufweist.

## Revendications

1. Système de commande de véhicule, le système comprenant :
une pluralité de capteurs ;
un dispositif (10) de commande centrale conçu pour produire des signaux de commande destinés à une pluralité de dispositifs, en fonction des sorties des capteurs respectifs ; et
une pluralité de dispositifs de relais (20, 40) disposés chacun dans une voie de communication entre le dispositif (10) de commande centrale et un dispositif correspondant parmi les dispositifs, et conçus pour relayer un signal de commande produit par le dispositif (10) de commande centrale,
dans lequel
les dispositifs de relais (20, 40) comprennent un dispositif de relais spécifique (21, 40) conçu pour délivrer un signal de commande à un dispositif spécifique (D22, D23, D24) non lié à la commande d'entraînement, à la commande de freinage et à la commande de direction d'un véhicule, le dispositif de relais spécifique (21, 40) comprenant une sous-unité de commande (21b, 40a) pouvant commander le dispositif spécifique (D22, D23, D24) en fonction d'une sortie d'au moins un capteur parmi les capteurs,
la sous-unité de commande (21b, 40a) est conçue pour délivrer un signal de commande permettant de régler le dispositif spécifique (D22, D23, D24) sur un état de fonctionnement ou sur un état de non-fonctionnement conformément à la sortie du ou des capteurs,
en réponse à une anomalie de commande centrale, c'est-à-dire une anomalie liée à un signal de commande en provenance du dispositif (10) de commande centrale, le dispositif de relais spécifique (21, 40) commande, à l'aide de la sous-unité de commande (21b, 40a), le dispositif spécifique (D22, D23, D24) accouplé au dispositif de relais spécifique (21, 40),
**caractérisé en ce que**
la commande du dispositif spécifique (D22, D23, D24), en fonction d'un signal en provenance d'un capteur spécifique (108, 109, 110) lié uniquement à un fonctionnement du dispositif spécifique (D22, D23, D24), parmi la pluralité de capteurs, est effectuée par la sous-unité de commande (21b, 40a),
le dispositif (10) de commande centrale est conçu pour produire un signal de commande destiné au dispositif spécifique (D22, D23, D24) en fonction d'informations environnementales externes au véhicule concernant un environnement à l'extérieur du véhicule et obtenues à partir des sorties des capteurs,
le dispositif de relais spécifique (21, 40) transmet le signal de commande, produit en fonction des informations environnementales externes au véhicule et transmis à partir du dispositif (10) de commande centrale, au dispositif spécifique (D22, D23, D24) accouplé au dispositif de relais spécifique (21, 40) lors de l'absence de l'anomalie de commande centrale,
la sous-unité de commande (21b, 40a) du dispositif de relais spécifique (21, 40) est conçue pour commander le dispositif spécifique (D22, D23, D24) accouplé au dispositif de relais spécifique (21, 40), conformément à un signal en provenance du capteur spécifique (108, 109, 110) indépendamment de la présence ou de l'absence de l'anomalie de commande centrale, et
lors de l'absence d'anomalie de commande centrale, si un signal de commande en provenance du dispositif (10) de commande centrale et un signal en provenance du capteur spécifique (108, 109, 110) sont introduits sensiblement en même temps, le dispositif de relais spécifique (21, 40) priorise le signal en provenance du capteur spécifique (108, 109, 110) et commande, à l'aide de la sous-unité de commande (21b, 40a), le dispositif spécifique (D22, D23, D24).

2. Le système de commande de véhicule selon la Revendication 1, dans lequel
l'anomalie de commande centrale comprend une anomalie dans le dispositif (10) de commande centrale, et
le dispositif (10) de commande centrale comprend une unité de diagnostic d'anomalie centrale conçue pour diagnostiquer une anomalie dans le dispositif (10) de commande centrale, et notifie au dispositif de relais spécifique (21, 40) la survenue de l'anomalie de commande centrale en réponse à la détection, par l'unité de diagnostic d'anomalie centrale, d'une anomalie dans le dispositif (10) de commande centrale.

3. Le système de commande de véhicule selon les Revendications 1 ou 2, dans lequel
le dispositif spécifique (D22, D23, D24) comprend un dispositif de vitre à commande électrique.
